# DEMANDE DE BREVET EUROPEEN

(11) **EP 1 111 555 A1**
(43) Date de publication de la demande: **27.06.2001**
(21) Numéro de dépôt: 00403613.3
(22) Date de dépôt: 20.12.2000
(51) Int. Cl.: G07F 7/02, G07F 7/08

(54) **Terminal de paiement électronique et son procédé d'utilisation**

(30) Priorité: 23.12.1999 FR 9916423
(71) Demandeur: SAGEM S.A., 75116 Paris (FR)
(72) Inventeur: Lemaire, Philippe, 78510 Triel sur Seine (FR)
(74) Mandataire: Schmit, Christian Norbert Marie

(57) **Abrégé**

Pour résoudre des problèmes de transfert de monnaie fiduciaire, on prévoit de munir les terminaux de paiement électroniques à disposition des commerçants de fonctions inverses. Ces terminaux de paiement sont alors capables d'éditer des messages de crédit de comptes clients, en contrepartie de sommes d'argent liquide reçues par ces commerçants. On montre qu'en agissant ainsi on facilite l'utilisation et la diffusion des paiements de type électronique.

## Description

La présente invention a pour objet un terminal de paiement électronique essentiellement destiné à un commerçant et son procédé d'utilisation. Le but de l'invention est de perfectionner ces terminaux pour leur donner plus de possibilités d'utilisation, pour qu'ils conviennent à des utilisations différentes de celles pour lesquelles ils ont été conçus initialement.

Dans le domaine du paiement électronique, on connaît les paiements avec des terminaux de paiement, notamment lorsque ces terminaux de paiement comportent des lecteurs de cartes à puce. L'invention sera décrite dans un tel contexte encore qu'à priori la carte de paiement, de crédit, utilisée pourrait être d'un type différent. Elle pourrait ainsi être une carte magnétique, une carte optique, une carte en carton perforable, toute une variété de carte étant possible.

Les terminaux de paiement connus sont installés chez des commerçants. Un client, détenteur d'une carte de paiement, se rend chez un tel commerçant et y fait l'acquisition d'un bien ou d'un service vendu par ce commerçant. Pour le paiement du bien ou du service acquis, le commerçant constitue avec le terminal de paiement un message de paiement. Ce message de paiement est destiné à être envoyé en temps réel ou en temps différé à la banque du commerçant, à un organisme financier, pour que celle-ci provoque au profit de ce commerçant une inscription en compte d'une quantité d'argent correspondant au paiement.

Dans le terminal de paiement, le message de paiement comporte essentiellement les informations relatives au client (celles-ci sont prélevées par le terminal de paiement dans la carte de paiement du client), et des informations relatives au montant du bien ou du service vendu. Pour qu'il soit complet le message de paiement doit comporter également des informations relatives au commerçant. Ces dernières informations qui sont de préférence incorporées dans un circuit de sécurité dont est doté le terminal de paiement peuvent être attribuées, globalement, à tous les messages de paiement qui sont envoyés en temps différé à la banque. Ces dernières informations peuvent aussi être attribuées à chaque message individuellement. Même avec une attribution globale on peut considérer que le message de paiement comporte les informations relatives au client acheteur, au commerçant, et au montant de la transaction entre eux. Un tel système fonctionne très bien.

L'acquisition d'un terminal de paiement est cependant onéreuse pour le commerçant et il pourrait être intéressant pour ce dernier de rentabiliser l'utilisation de cet appareil.

Par ailleurs on connaît d'autres besoins, notamment des problèmes de change de monnaie. En Europe, notamment avec l'arrivée prochaine de l'Euro comme monnaie obligatoire en 2002, il sera nécessaire d'effectuer rapidement des conversions importantes de monnaie. Il est possible que les commerçants soient ainsi mis à contribution pour recevoir des versements en monnaie fiduciaire nationale et effectuer un change dans une monnaie régionale, par exemple en Euro. Même s'il n'y a pas d'achat auprès d'un commerçant, un tel commerçant peut être ainsi amené à effectuer le change d'une monnaie nationale fiduciaire en une monnaie en Euro elle aussi fiduciaire. Ce change présente deux types de difficultés. Un premier type de difficulté provient de la complexité des taux de change. En effet ceux-ci sont donnés avec cinq décimales au moins. Ceci rend les opérations de conversion particulièrement complexes ainsi que le rendu exact de monnaie en centimes. Deuxièmement l'opération de change nécessite d'avoir à disposition la monnaie de change, régionale. Cette mise à disposition implique un stockage de quantités importantes de monnaie induisant des risques de vol.

Dans un autre domaine, celui des porte-monnaie électroniques on sait recharger les porte-monnaie électroniques. Cependant, comme ces dernières opérations risquent d'être très fréquentes, il est possible que les services bancaires dans les banques ne soient pas suffisants pour effectuer toutes les transactions envisageables par tous les individus. Si le rechargement des porte-monnaie électroniques n'est effectué que dans des agences bancaires, un tel rechargement imposera l'obligation pour ces établissements d'installer en de nombreux endroits des dispositifs, des monnayeurs, pour recevoir de la monnaie fiduciaire, pièces ou billets, et des lecteurs de carte (à puce) pour recevoir des cartes (à puce) de porte-monnaie, pour recharger ces porte-monnaie. De tels dispositifs sont complexes, présentent par ailleurs l'inconvénient d'être des cibles désignées pour les vandales, et le taux de pannes constaté pour des dispositifs similaires est très important.

Un type de transaction complémentaire est décrit dans le document FR-B-2 720 848. Cependant le procédé décrit dans ce document ne permet en fait que d'échanger des données électroniques entre deux cartes à puce. Il ne permet pas la remise concomitante de monnaie fiduciaire tangible et l'édition de monnaie électronique, virtuelle, par des agents multiples, autres que bancaires.

Dans l'invention pour résoudre ces problèmes on a eu l'idée d'utiliser les terminaux commerçants, et d'une certaine manière les commerçants eux-mêmes, pour mener à bien en une opération inverse à celle d'un paiement, un change de monnaie et/ou un rechargement de porte-monnaie électronique. Selon l'invention un client se rend auprès d'un commerçant et lui remet une certaine somme d'argent en monnaie fiduciaire, par exemple nationale, et ce commerçant soit établit un message de crédit pour créditer le compte de ce client auprès de la banque soit recharge le porte-monnaie électronique de ce client. Dans les deux cas, le client introduit une carte à puce correspondante, carte bancaire ou carte porte-monnaie, dans le terminal selon l'invention du commerçant. Le message de crédit ou de rechargement composé est à une valeur proportionnelle (ou égale) à la somme remise.

Dans l'invention le circuit de sécurité du lecteur enregistre alors le montant de cette transaction et l'impute au commerçant. Celui-ci pour être quitte à l'égard de sa banque doit transférer à celle-ci à la fois son circuit de sécurité et les sommes remises par les clients. En principe ces deux sommes doivent se correspondre exactement. Eventuellement pour le rémunérer de ce service, la banque peut octroyer à ce commerçant un certain pourcentage sur les sommes ainsi transférées.

En agissant ainsi on résout le problème de l'existence des monnayeurs en même temps qu'on pallie le problème qui pourrait survenir du fait d'une demande massive de change de monnaie, en 2002 notamment, et qu'on augmente la commercialité des commerçants.

L'invention a donc pour objet un terminal de paiement électronique de commerçant comportant
- un circuit de traitement de données numériques,
- un lecteur de carte de paiement relié à ce circuit de traitement pour recevoir une carte de paiement d'un client, et
- un circuit de sécurité relié à ce circuit de traitement pour sécuriser des transactions de paiement entre ce circuit de traitement et une carte de paiement d'un client en relation avec le lecteur,
   caractérisé en ce qu'il comporte
- dans le circuit sécurisé, un circuit pour autoriser des transactions inverses correspondant à des achats de devises par ce commerçant.

Elle a également pour objet un procédé d'échange de devises dans lequel
- un établissement financier munit un terminal de paiement électronique d'un commerçant client de cet établissement financier avec un circuit sécurisé d'échange,
caractérisé en ce qu'il comporte les étapes suivantes
- le commerçant reçoit en dépôt des devises en monnaie fiduciaire apportées par un client déposant,
- le circuit sécurisé autorise le commerçant à créditer avec son terminal de paiement électronique une carte de paiement de ce client déposant d'un montant qui est une contrepartie des devises déposées,
- le commerçant crédite le montant autorisé,
- le terminal de paiement électronique enregistre cette opération de crédit.

L'invention sera mieux comprise à la lecture de la description qui suit et à l'examen des figures qui l'accompagnent. Celles-ci ne sont présentées qu'à titre indicatif et nullement limitatif de l'invention. Les figures montrent:
- Figure 1 : une représentation schématique d'un terminal de paiement perfectionné selon l'invention, et de son utilisation ;
- Figures 2a à 2c: respectivement, des représentations schématiques d'opérations de transfert dans l'état de la technique pour augmenter un porte-monnaie électronique ou pour faire un paiement électronique et, selon l'invention, pour faire ces deux opérations dans un terminal de paiement ;
- Figure 3: une représentation schématique des opérations de mise à jour du circuit de sécurité du terminal de paiement électronique du commerçant lors de régularisations régulières.

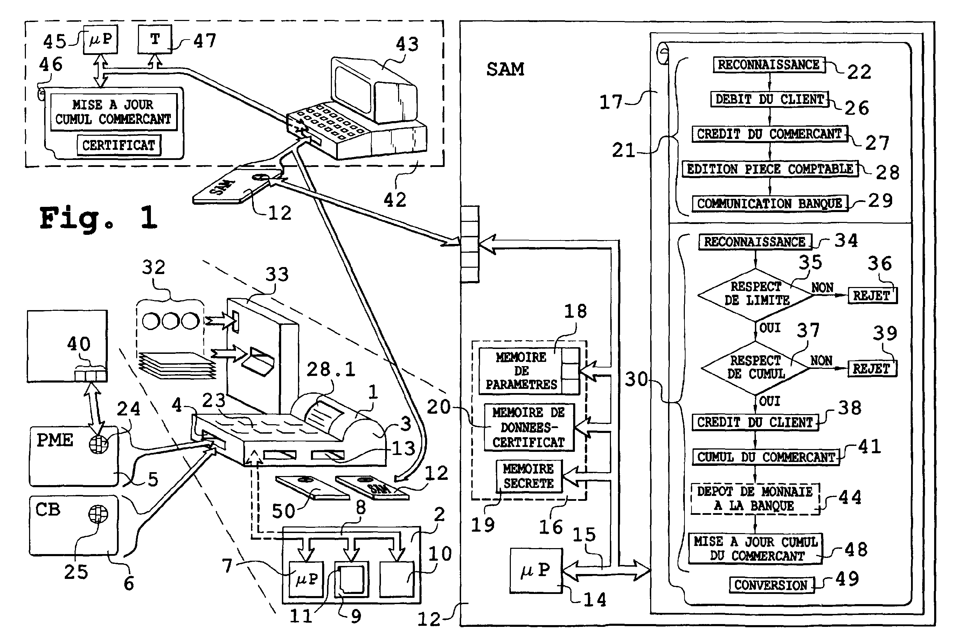

La figure 1 montre un terminal de paiement électronique 1 selon l'invention. Ce terminal de paiement électronique 1 comporte un circuit 2 de traitement de données numériques muni en particulier d'un clavier, d'un dispositif de visualisation, et d'un dispositif 3 d'impression. Ici on a montré que le terminal était capable d'éditer une facturette ou plus généralement un ticket correspondant à la transaction. Le terminal comporte par ailleurs un lecteur 4, représenté par une fente d'introduction ici, pour recevoir une carte de paiement d'un client. D'une manière préférée la carte de paiement sera une carte à puce, et dans ce cas en particulier une carte porte-monnaie électronique 5 ou une carte bancaire 6 (pour entrer en relation avec une banque).

Le circuit 2 de traitement de données numériques comporte, d'une manière simplifiée, un microprocesseur 7 en relation par l'intermédiaire d'un bus 8 avec une mémoire programme 9 et une mémoire de données 10. Un programme 11 chargé dans la mémoire 9, dans le cas où le terminal 2 de paiement comporte également les fonctions classiques d'un terminal de paiement électronique, provoque la reconnaissance par le lecteur 4 de la carte à puce 5 ou 6 du client. Cette reconnaissance est effectuée sous le contrôle d'un circuit de sécurité 12, dit SAM Secure Access Module (Module d'accès sécurisé), introduit dans un lecteur 13 du circuit sécurisé, lui aussi en relation par le bus 8 avec le microprocesseur 7 ou les cartes 5 ou 6. Une telle architecture est connue et conduit à l'édition de messages de paiement destinés à un organisme bancaire. Ces messages servent à provoquer des transactions financières correspondantes.

La structure du circuit 12, sur le plan fonctionnel, est montrée à droite de la figure. Ce circuit 12 comporte dans son principe un microprocesseur 14 en relation par un bus 15 avec un groupe 16 de mémoires de données et une mémoire programme 17. Le groupe 16 peut comporter une mémoire 18 de paramètres comportant des données notamment relatives à l'identité ou la personnalité du commerçant détenteur du terminal 1. Le groupe 16 peut également comporter une mémoire secrète 19 dont le contenu ne peut être que lu par le microprocesseur 14, et qui permet de valider la reconnaissance d'une carte à puce 5 ou 6 introduite dans le lecteur 4. Le groupe 16 comporte également une mémoire 20 de données pour des certificats. Un certificat est un mot constitué, notamment à partir d'un algorithme secret, à partir d'un solde contenu dans la mémoire 20, de paramètres contenus dans la mémoire 18, d'un code secret contenu dans la mémoire 19, ainsi que d'autres arguments, notamment le résultat d'un compteur d'opérations du microprocesseur 14. Un tel certificat assure une cohérence entre un cumul annoncé, mémorisé dans la mémoire 20, et une méthode non frauduleuse d'obtention de ce cumul.

D'une manière connue un terminal de paiement électronique de commerçant met en oeuvre un programme 21, de type connu, contenu dans la mémoire 17. Le programme 21 comporte une première étape de reconnaissance 22 au cours de laquelle le terminal 1 demande au client détenteur de la carte de paiement 5 ou 6 de composer sur le clavier 23 du lecteur 1 son code secret. Ce code composé est traité par un circuit intégré 24 ou 25 de la carte 5 ou de la carte 6 respectivement. Une autorisation de continuer la transaction en résulte. Eventuellement au cours de la reconnaissance 22, la carte à puce 5 ou 6 peut reconnaître le caractère non frauduleux du terminal 1, c'est à dire du circuit 12 de sécurité.

Une fois que ces opérations ont eu lieu, un message de paiement peut être élaboré comportant essentiellement une instruction 26 de constitution d'un message de débit d'un compte du client (représenté par une identité prélevée dans la carte à puce 5 ou la carte à puce 6), et une instruction 27 de crédit d'un compte commerçant dont l'identité est prélevée dans la mémoire 18 du circuit 12. Ce message de paiement est bien entendu complété par un montant apparaissant sur un écran du terminal 1. Il peut par ailleurs être concrétisé par une édition 28 d'une pièce comptable 28.1 imprimée par l'imprimante 3. Le programme 21 est par ailleurs terminé par une communication du message de paiement ainsi constitué à la banque, au cours d'une opération 29. Diverses façons de réaliser le programme 21 sont envisageables notamment celle dans laquelle l'opération 29 n'est effectuée qu'une fois pour toutes, tous les soirs, en transmettant un cumul des opérations effectuées, chaque message de paiement étant lui-même certifié par l'édition d'un certificat.

A ce programme 21 de type connu, l'invention ajoute maintenant dans le circuit 12 un programme nouveau 30 permettant au terminal de paiement électronique fondamentalement de fonctionner en sens inverse. Ce fonctionnement en sens inverse est destiné à provoquer chez le commerçant une réception de devises 32. Cette collecte de devises se réalise sans avoir besoin d'installer un monnayeur automatique 33. Dans ce but, le client donne physiquement au commerçant, dans ses mains, des billets et des pièces de monnaie fiduciaire 32. En même temps, il lui donne sa carte à puce 5 ou 6 pour que celle-ci soit introduite dans le lecteur 1. Le lecteur 1 lance alors une étape de reconnaissance 34 du même type que l'étape 22. En cas de succès de cette reconnaissance la transaction peut être poursuivie.

Les paiements avec carte à puce de type classique subissent des limites de montants (entraînant généralement en cas dépassement une obligation de communication en temps réel du terminal 1 de paiement à des services de la banque du commerçant). D'une manière comparable le programme 30 comportera un test 35 de ce que le dépôt d'argent désiré par le client n'est pas supérieur à une limite. Par exemple on peut imaginer qu'un dépôt supérieur à 100 Euros, ou équivalent, peut ne pas être autorisé. A cet effet, si la somme transférée ou convertie, indiquée sur le clavier 23 par le commerçant, est supérieure à cette somme, le dépôt d'argent sera refusé. Par une instruction 36 le lecteur indiquera alors que le transfert est refusé. Il ne reste plus au commerçant qu'à rendre au client la somme 32. Notamment, l'opération 35 de respect de limite peut aussi être liée à l'identité mémorisée dans la carte à puce 5 ou 6 introduite dans le lecteur 1 ainsi qu'à l'identité du lecteur 1 mémorisée dans la mémoire 18 du circuit 12. En pratique, entre chaque session de connexion du circuit 12 avec les circuits de la banque, un client ne pourra déposer qu'une somme limitée, notamment en vue de conversion de monnaie, auprès d'un même commerçant. La présence du test 35 n'est cependant pas indispensable dans l'invention.

Si le respect de la limite est acquis, ou si aucun test 35 n'est entrepris, le programme 30 lance alors un autre test 37 de respect de cumul. Ce respect de cumul a pour objet de limiter les opérations de change de monnaie par un même terminal de paiement 1, en pratique par un même circuit 12 de sécurité, à un montant limite, par exemple 10.000 Euros. Si le cumul 37 est respecté c'est à dire si le montant des échanges déjà effectués sur le terminal de paiement est inférieur à un cumul maximum, le crédit de la carte à puce du client est entrepris au cours d'une opération 38. Sinon un rejet 39 de toute l'opération est provoqué.

Le crédit de la carte à puce du client peut prendre la forme de l'édition d'un message de crédit de sens opposé à un message de paiement, c'est à dire comportant les mêmes éléments mais avec une indication d'un sens de transaction inverse. Le message de crédit comporte l'identité de la carte 6, celle du circuit 12 et le montant. Si la carte à puce du client est une carte à puce de porte-monnaie électronique, des unités telles que 40 sont inscrites dans la puce 24 de la carte à puce 5. Concomitamment, au cours d'une opération 41 le cumul du commerçant sera modifié dans la mémoire de données 20 pour indiquer le montant cumulé des transactions, jusqu'à la transaction qui vient d'être effectuée. Dans le cas d'un message de crédit la mémoire 20 comporte donc deux informations qui se correspondent : un message de crédit et un cumul modifié. Dans le cas d'un transfert sur un porte-monnaie électronique la mémoire 20 comporte deux informations, le cumul modifié et le nombre d'unités transférées.

Ainsi de suite la mémoire de données 20 se modifie pour comporter un cumul de commerçant de plus en plus important, et pour comporter des certificats différents à chaque opération nouvelle. A l'issue d'une certaine durée, ou régulièrement, le commerçant dépose les monnaies fiduciaires 32 collectées à sa banque 42. Ce faisant, ce commerçant peut également prélever le circuit de sécurité 12 (qui dans ce cas est amovible) et l'amener à titre de régularisation dans un lecteur 43 de la banque 42. Cependant l'opération 44 de dépôt de monnaie n'est pas nécessairement accompagné de l'amovibilité du circuit 12. La régularisation de ce circuit 12 peut notamment être organisée par le lecteur 43, ou par un circuit équivalent, par l'intermédiaire d'une connexion de type téléphonique. Au cours de cette régularisation, le lecteur 43 décrémente le cumul du circuit 12 au prorata des unités de monnaies fiduciaires déposées à la banque 42 et des messages de crédit édités ou des messages de transfert d'unités de porte-monnaie électroniques.

Dans ce but le terminal 43 de la banque, ou le circuit équivalent, comportera un processeur 45 une mémoire programme pour mettre en oeuvre un programme 46 de mise à jour du cumul commerçant et de vérification du certificat et d'une manière connue une mémoire de données 47 pour mémoriser des données de comptes comptables. Le programme 46 et le programme 30 sont tels que la mise à jour 48 du cumul du commerçant dans le circuit 12 doit être équilibrée, dans les services de la banque 42, et dans ce circuit 12, notamment en fonction de la somme d'argent déposée par le commerçant.

A titre complémentaire, le programme 30 comportera un sous-programme 49 de conversion, notamment pour convertir une quantité d'argent reçue en monnaie nationale en une quantité d'argent en monnaie régionale (en Euro). Cette somme est alors inscrite en compte par l'intermédiaire de la carte bancaire 6 ou inscrite dans le porte-monnaie électronique 5.

Un circuit 12 prévu initialement dans les lecteurs 1 pouvant ne pas être amovible et être seulement dédié aux opérations du programme 21, il est possible de prévoir que le programme 30, y compris le sous-programme 49, puisse être mis en oeuvre par un autre circuit 50, amovible de préférence, du même type que le circuit 12 mais dédié à cette dernière fonction et en relation avec un lecteur et le microprocesseur 7 du terminal 1sur le bus 8. Il est toutefois envisageable de munir le circuit 12 des deux programmes 21 et 30 si leur encombrement en mémoire n'est pas trop grand.

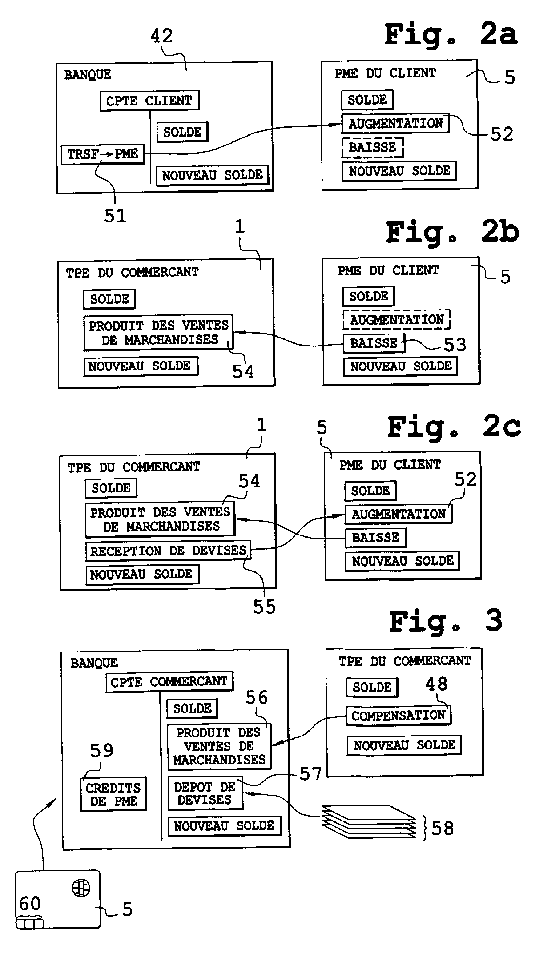

La figure 2a représente une opération de crédit d'un porte-monnaie électronique de client, typiquement la carte à puce 5. Cette carte à puce 5 comporte un solde. Par ailleurs le client possède dans les services de la banque 42 un compte client présentant également un solde (normalement supérieur). Au moment où ce client remet son porte-monnaie électronique dans un lecteur, par exemple 43 de la banque 42 il demande un transfert 51 de monnaie vers son porte-monnaie électronique. Le transfert 51 provoque une augmentation 52 du solde de ce porte-monnaie électronique pour constituer un nouveau solde et une diminution du compte en banque.

Sur la figure 2b une opération de paiement avec le même porte-monnaie électronique 5 est montrée avec un terminal de paiement électronique 1 de l'état de la technique. La baisse 53 du solde du porte-monnaie électronique client est compensée par une augmentation 54 du solde du terminal de paiement du commerçant correspondant au produit des ventes de marchandises au client.

La figure 2c, montre selon l'invention, qu'avec un même porte-monnaie électronique 5, on peut non seulement mener l'opération 54 normale avec le terminal 1 de paiement électronique du commerçant, mais également une opération 55 de réception de devises conduisant à une augmentation 52 (identique à celle de la figure 2a) du solde de ce porte-monnaie électronique. Autrement dit, la faible transformation du terminal 1 de paiement électronique, limitée ici à la modification du circuit de sécurité 12 (et seulement pour lui adjoindre le programme 30), résout un grand problème de manipulation d'argent et notamment le problème dû à l'existence de monnayeurs inverse 33 qui attirent les convoitises des vandales. On peut bien entendu transposer le schéma des figures 2a à 2c à une élaboration d'un message de paiement avec une carte bancaire telle que 6.

La figure 3 montre, pour la compensation dans le terminal 43 l'opération financière effectuée dans le compte du commerçant. Ce compte présente un solde avant l'opération 48 de compensation. Au moment de celle-ci, ce solde se trouve augmenté en une opération 56 par le produit des ventes de marchandises effectuées par le commerçant. Cette augmentation résulte des opérations 54 induites par la baisse 53 des soldes des porte-monnaie électroniques payeurs, ou par l'édition de messages de paiement provenant des cartes à puce bancaires des clients. Par ailleurs ce solde se trouve augmenté par une opération 57 correspondant à la remise à la banque 44 des devises 58 apportées par les clients, soit en paiement, soit à titre d'échange de monnaie, soit à titre d'augmentation du contenu de leur porte-monnaie électronique. En compensation, le compte du commerçant est diminué en une opération 59 du montant cumulé des crédits 60 de porte-monnaie électroniques enregistrés avec le terminal 1. Le montant final est le nouveau solde du compte commerçant.

Le terminal de paiement électronique 1 a été montré jusqu'ici comme un terminal de paiement de commerçant. Néanmoins il est tout à fait possible de l'utiliser en conjonction avec un monnayeur 33 qui remplacerait alors la personne physique du commerçant. Dans la mesure où le fonctionnement de ces monnayeurs 33 n'est par ailleurs pas un problème, le dispositif et le procédé présentés peuvent ainsi être insérés dans des horodateurs, dans des billetteries des organismes publics ou, bien entendu, dans des distributeurs automatiques de billets de banques des banques elles-mêmes.

Ce fonctionnement décrit jusqu'ici fait intervenir le compte du commerçant, directement en compensation d'une somme qu'il manipule. Dans ce cas le commerçant sera naturellement amené à percevoir une commission, relativement importante, sur les opérations de transfert monétaire qu'il accomplit. Il est possible toutefois de réduire cette commission et par ailleurs d'engager la responsabilité du commerçant de manière moins forte en lui déléguant une opération bancaire. Avec le terminal de paiement inversé selon l'invention, le commerçant devient un agent bancaire, à responsabilité limitée au montant des limites 35 ou 37. Dans ce cas, les opérations comptabilisées pour le transfert monétaire ne seront pas faites sur son compte mais sur un compte délégué. Ce compte délégué peut par ailleurs être assorti d'une prise d'une assurance, par exemple à la charge de la banque. Dans ce cas la commission du commerçant sera réduite.

Sur le plan pratique, au cas où une telle dualité est recherchée, une telle démarche revient à organiser dans le circuit 12 ou dans des circuits équivalents, une duplication de la mémoire de données 20. Une de ces mémoires 20 convient aux opérations classiques du terminal de paiement engageant le compte du commerçant, une autre convenant aux opérations déléguées. Dans ce cas le commerçant peut au moment où il effectue la transaction choisir un ou l'autre de ces modes. La duplication du circuit de sécurité 12 en circuit de sécurité 50 peut notamment convenir à une telle dualité de mode de fonctionnement. Mais une autre architecture est possible les deux mémoires 20 pouvant physiquement être réalisées en une seule.

## Revendications

1. Terminal de paiement électronique de commerçant comportant
- un circuit de traitement de données numériques,
- un lecteur de carte de paiement relié à ce circuit de traitement pour recevoir une carte de paiement d'un client, et
- un circuit de sécurité relié à ce circuit de traitement pour sécuriser des transactions de paiement entre ce circuit de traitement et une carte de paiement d'un client en relation avec le lecteur,
caractérisé en ce qu'il comporte
- dans le circuit sécurisé, un circuit pour autoriser des transactions inverses correspondant à des achats de devises par ce commerçant.

2. Terminal selon la revendication 1, caractérisé en ce qu'il comporte un circuit de conversion des devises d'une monnaie dans une autre.

3. Terminal selon l'une des revendications 1 à 2, caractérisé en ce qu'il comporte un monnayeur automatique.

4. Terminal selon l'une des revendications 1 à 3, caractérisé en ce que le circuit de sécurité est amovible.

5. Procédé d'échange de devises dans lequel
- un établissement financier munit un terminal de paiement électronique d'un commerçant client de cet établissement financier avec un circuit sécurisé d'échange,
caractérisé en ce qu'il comporte les étapes suivantes
- le commerçant reçoit en dépôt des devises en monnaie fiduciaire apportées par un client déposant,
- le circuit sécurisé autorise le commerçant à créditer avec son terminal de paiement électronique une carte de paiement de ce client déposant d'un montant qui est une contrepartie des devises déposées,
- le commerçant crédite le montant autorisé,
- le terminal de paiement électronique enregistre cette opération de crédit.

6. Procédé selon la revendication 5, caractérisé en ce que
- le crédit en contrepartie comporte une conversion de monnaie.

7. Procédé selon l'une des revendications 5 à 6, caractérisé en ce que
- le crédit en contrepartie comporte une limitation de la contrepartie.

8. Procédé selon la revendication 7, caractérisé en ce que
- la limitation de la contrepartie est un maximum autorisé pour une opération de crédit.

9. Procédé selon l'une des revendications 5 à 8, caractérisé en ce que
- la limitation de la contrepartie comporte le calcul d'un cumul des montants crédités autorisés par le circuit sécurisé d'échange et la vérification que ce cumul n'est pas dépassé.

10. Procédé selon l'une des revendications 5 à 9, caractérisé en ce que
- le crédit de la carte de paiement comporte le crédit d'un porte-monnaie électronique.

11. Procédé selon l'une des revendications 5 à 10, caractérisé en ce que
- le crédit de la carte de paiement comporte le crédit d'un compte auprès d'un établissement financier du titulaire de cette carte de paiement.

12. Procédé selon l'une des revendications 5 à 11, caractérisé en ce que
- le commerçant reçoit sur un compte des unités monétaires proportionnelles aux montants crédités autorisés.

13. Procédé selon l'une des revendications 5 à 11, caractérisé en ce que
- on enlève un circuit de sécurité du terminal, on le transmet à l'établissement financier et on remet un circuit de sécurité dans le terminal.
